# EUROPEAN PATENT APPLICATION

(11) **EP 4 280 076 A1**
(43) Date of publication of application: **22.11.2023**
(21) Application number: 22173790.1
(22) Date of filing: 17.05.2022
(51) Int. Cl.: G06F 16/242

(54) **DATA RETRIEVAL**

(71) Applicant: ASML Netherlands B.V., 5500 AH Veldhoven (NL)
(72) Inventor: VAN GEENEN, Jurjen, Lippold, 5500 AH Veldhoven (NL)
(74) Representative: ASML Netherlands B.V.

(57) **Abstract**

A method of retrieving data from at least one data store which stores a plurality of data sets each having a tabular data structure, the method comprising: receiving a query which comprises semantic information and requests data associated with the semantic information from the data store(s); determining from the semantic information whether the query can be serviced using data selected from and/or derived from one or more candidate data set of the plurality of data sets; if multiple candidate data sets can service the query, using a cost function to determine at least one candidate data set of the multiple candidate data sets to service the query, and determine a portion of each of the at least one candidate data set to service the query; and returning a response to the query, the response comprising data obtained using the portion of each of the at least one candidate data set.

## Description

### FIELD

The present invention relates to data retrieval, in particular retrieving data from at least one data store, the at least one data store storing a plurality of data sets each having a tabular data structure.

### BACKGROUND

A lithographic apparatus is a machine constructed to apply a desired pattern onto a substrate. A lithographic apparatus can be used, for example, in the manufacture of integrated circuits (ICs). A lithographic apparatus may, for example, project a pattern (also often referred to as "design layout" or "design") at a patterning device (e.g., a mask) onto a layer of radiation-sensitive material (resist) provided on a substrate (e.g., a wafer).

To project a pattern on a substrate a lithographic apparatus may use electromagnetic radiation. The wavelength of this radiation determines the minimum size of features which can be formed on the substrate. Typical wavelengths currently in use are 365 nm (i-line), 248 nm, 193 nm and 13.5 nm. A lithographic apparatus, which uses extreme ultraviolet (EUV) radiation, having a wavelength within the range 4-20 nm, for example 6.7 nm or 13.5 nm, may be used to form smaller features on a substrate than a lithographic apparatus which uses, for example, radiation with a wavelength of 193 nm.

Currently during lithographic processing much context data is generated. This context data is a large set of values of variables associated with measurements and machine/process settings. The quality of the lithographic process is expressed in so-called performance data consisting of a set of values of performance indicators. Performance indicators can be related to CD (critical dimension) control, overlay control (the accuracy of alignment of two layers in a device) or underlying parameters (e.g. focus and dose). Performance data is of great interest as this data allows control of the lithographic process. For example, knowledge of overlay performance will be used to take corrective actions (e.g. by changing machine settings). At the same time knowledge of performance data is instrumental for triggering out-of-range situations (e.g. for process control and finding the cause of out-of-range situation).

Performance data and context data associated with a particular lithographic apparatus can be stored in one or more data stores. It will be appreciated that a semiconductor fabrication plant comprising many lithographic apparatuses will output large amounts of performance data and context data for storage in the one or more data stores. Such data can be stored in the form of data sets each having a tabular data structure for later retrieval.

Industry standard big-data query engines such as Apache Spark SQL, SnowFlake, Presto, Dremio all use a variant of the ASNI Structured Query Language (SQL) to query data. SQL requires either application programmer or end-user of an application to identify the table(s) to SELECT data FROM, and specify or calculate JOINs required to satisfy user's request by hand. By removing the FROM clause the user can specify only the semantic structure of the result-set, not how it is composed. This moves the problem of identifying the tables to SELECT data FROM to a software layer on top of a data-warehouse. A trivial mapping of semantic query to tables is possible if each requested column appears in one table. This mandates a fully normalized data-warehouse. This would cause a lot of runtime JOINs, which are quite slow in comparison to simple SELECTs. A common data-warehouse technique to prevent runtime JOINs is to perform them for tables likely to need them once in an ETL (Extract, Transform, Load) pipeline. The result is however a denormalized data-warehouse in which the trivial mapping does not work.

### SUMMARY

According to one aspect of the present disclosure there is provided a computer implemented method of retrieving data from at least one data store, the at least one data store storing a plurality of data sets each having a tabular data structure, the method comprising:
receiving a query, wherein the query comprises semantic information and requests data associated with the semantic information from the at least one data store;
determining from the semantic information whether the query can be serviced using data selected from and/or derived from one or more candidate data set of the plurality of data sets;
if multiple candidate data sets of the plurality of data sets can service the query, using a cost function to determine at least one candidate data set of the multiple candidate data sets to service the query, and determine a portion of each of the at least one candidate data set to service the query; and
returning a response to the query, the response comprising data obtained using the portion of each of the at least one candidate data set.

In comparison with known queries such as SQL queries, the query used in embodiments of the present disclosure does not express where data is to be selected from. That is, the query does not include an identifier of a table from which data is to be retrieved from. This means that the query is simplified and client computing devices do not (need to) know the entity-relational-model (ERM) of data sets stored in the at least one data store.

The semantic information may comprise at least one performance indicator. In these embodiments, the determining may comprise determining that the multiple candidate data sets each comprise a column corresponding to at least one of said at least one performance indicators.

The semantic information may comprise a function.

The semantic information may comprise at least one piece of context information.

The semantic information comprises at least one performance indicator and the context information comprises a granularity level of the requested performance indicator, and said determining comprises determining that each of the multiple candidate data sets each comprise a column corresponding to said performance indicator at the granularity level or a column from which a column corresponding to said performance indicator at the granularity level can be derived.

The context information may comprise one or more of: a time window, at least one identifier of one or more physical machines, an identifier of a physical object, a job identifier of a job which occurred, and a measurement location on a physical object.

The semantic information may comprise a performance indicator column specification, said specification comprising: (i) a performance indicator type; (ii) a function; and (iii) and a granularity level, and said determining may comprise:
determining that each of the multiple candidate data sets each comprise:
a column corresponding to said specification; or
a column from which a column corresponding to said specification can be derived.

The determining from the semantic information that the query can be serviced using data selected from multiple candidate data sets of the plurality of data sets may comprise:
determining that the semantic information comprises a function;
determining what input data to the function is being specified by the semantic information; and
determining that the query can be serviced based on identifying a candidate data set comprising a column associated with data output by the function when supplied with the input data.

The determining from the semantic information that the query can be serviced using data derived from multiple candidate data sets of the plurality of data sets may comprise:
determining that the semantic information comprises an function;
determining from the semantic information that the function comprises a further aggregation function as an input;
determining what input data to the further function is being specified by the semantic information; and
determining that the query can be serviced based on identifying a candidate data set comprising a column associated with data output by the further function when supplied with the input data.

The cost function may determine at least one candidate data set of the multiple candidate data sets to service the query based on assessing one or more attributes of each of the multiple candidate data sets.

The attributes comprise one or any combination of:
a number of rows of the candidate data set;
a number of columns of the candidate data set; and
wherein the semantic information comprises a performance indicator, whether the candidate data set comprises a column associated with the performance indicator and no further column associated with a further performance indicator, or the candidate data set comprises a column associated with the performance indicator and a further column associated with a further performance indicator.

The method may further comprise determining if retrieving data associated with the semantic information from the at least one data store will involve unnecessary computation, and if so, rewriting the user query.

The method may further comprising combining the portion of each of the at least one candidate data set to generate said data.

The determining from the semantic information that the user query can be serviced using data selected from and/or derived from multiple candidate data sets of the plurality of data sets is performed without the user query comprising an identifier of the multiple candidate data sets.

In response to determining that only a single candidate data set of the plurality of data sets can service the query, the method comprising returning a response to the query, the response comprising data obtained using the single candidate data set.

The query may be a user query.

The method may comprise: receiving said query from a user computing device via a computer network; and returning a response to the query comprises transmitting the response to the user computing device via the computer network.

According to another aspect of the present disclosure there is provided at least one non-transitory computer-readable storage medium comprising instructions which, when executed by a processor of a computing device cause the processor to perform any of the methods described herein.

The instructions may be provided on one or more carriers. For example there may be one or more non-transient memories, e.g. a EEPROM (e.g. a flash memory) a disk, CD- or DVD-ROM, programmed memory such as read-only memory (e.g. for Firmware), one or more transient memories (e.g. RAM), and/or a data carrier(s) such as an optical or electrical signal carrier. The memory/memories may be integrated into a corresponding processing chip and/or separate to the chip. Code (and/or data) to implement embodiments of the present disclosure may comprise source, object or executable code in a conventional programming language (interpreted or compiled) such as C, or assembly code, code for setting up or controlling an ASIC (Application Specific Integrated Circuit) or FPGA (Field Programmable Gate Array), or code for a hardware description language.

According to another aspect of the present disclosure there is provided a computing device for retrieving data from at least one data store accessible to the computing device, the at least one data store storing a plurality of data sets each having a tabular data structure, the computing device comprising: a processor, wherein the processor is configured to:
receive a query, wherein the query comprises semantic information and requests data associated with the semantic information from the at least one data store;
determine from the semantic information whether the query can be serviced using data selected from and/or derived from one or more candidate data set of the plurality of data sets;
if multiple candidate data sets of the plurality of data sets can service the query, use a cost function to determine at least one candidate data set of the multiple candidate data sets to service the query, and determine a portion of each of the at least one candidate data set to service the query; and
return a response to the query, the response comprising data obtained using the portion of each of the at least one candidate data set.

### BRIEF DESCRIPTION OF THE DRAWINGS

Embodiments of the invention will now be described, by way of example only, with reference to the accompanying schematic drawings, in which:
- Figure 1 depicts a schematic overview of a lithographic apparatus;
- Figure 2 depicts a schematic overview of a lithographic cell;
- Figure 3 depicts a schematic representation of holistic lithography, representing a cooperation between three key technologies to optimize semiconductor manufacturing;
- Figure 4 illustrates a system in which a query is transmitted over a network to a server;
- Figure 5a is a schematic block diagram of the server
- Figure 5b is a schematic block diagram of a computing device which handles responding to a query locally;
- Figure 6 illustrates an example data set;
- Figure 7 illustrates a context model;
- Figure 8 illustrates a first view of a processing data model;
- Figure 9 illustrates a second view of the processing data model; and
- Figure 10 is flow chart of a method of retrieving data from one or more data stores.

### DETAILED DESCRIPTION

In the present document, the terms "radiation" and "beam" are used to encompass all types of electromagnetic radiation, including ultraviolet radiation (e.g. with a wavelength of 365, 248, 193, 157 or 126 nm) and EUV (extreme ultra-violet radiation, e.g. having a wavelength in the range of about 5-100 nm).

The term "reticle", "mask" or "patterning device" as employed in this text may be broadly interpreted as referring to a generic patterning device that can be used to endow an incoming radiation beam with a patterned cross-section, corresponding to a pattern that is to be created in a target portion of the substrate. The term "light valve" can also be used in this context. Besides the classic mask (transmissive or reflective, binary, phase-shifting, hybrid, etc.), examples of other such patterning devices include a programmable mirror array and a programmable LCD array.

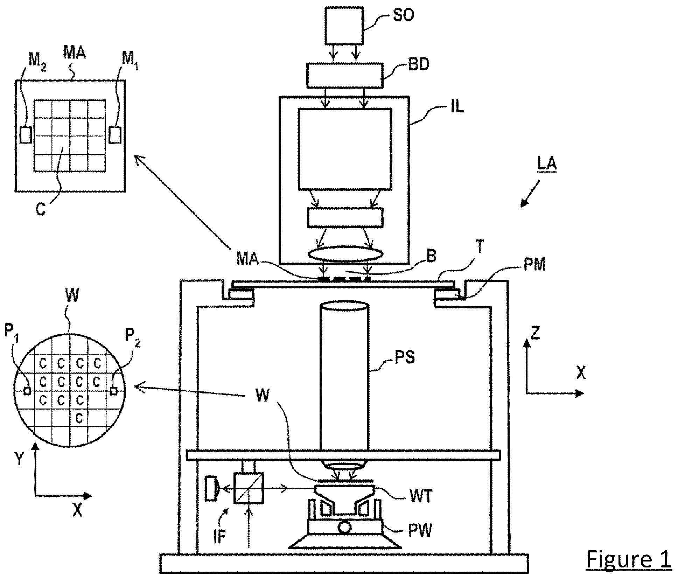

Figure 1 schematically depicts a lithographic apparatus LA (otherwise referred to herein as an exposure machine). The lithographic apparatus LA includes an illumination system (also referred to as illuminator) IL configured to condition a radiation beam B (e.g., UV radiation, DUV radiation or EUV radiation), a mask support (e.g., a mask table) MT constructed to support a patterning device (e.g., a mask) MA and connected to a first positioner PM configured to accurately position the patterning device MA in accordance with certain parameters, a substrate support (e.g., a wafer table) WT constructed to hold a substrate (e.g., a resist coated wafer) W and connected to a second positioner PW configured to accurately position the substrate support in accordance with certain parameters, and a projection system (e.g., a refractive projection lens system) PS configured to project a pattern imparted to the radiation beam B by patterning device MA onto a target portion C (e.g., comprising one or more dies) of the substrate W.

In operation, the illumination system IL receives a radiation beam from a radiation source SO, e.g. via a beam delivery system BD. The illumination system IL may include various types of optical components, such as refractive, reflective, magnetic, electromagnetic, electrostatic, and/or other types of optical components, or any combination thereof, for directing, shaping, and/or controlling radiation. The illuminator IL may be used to condition the radiation beam B to have a desired spatial and angular intensity distribution in its cross section at a plane of the patterning device MA.

The term "projection system" PS used herein should be broadly interpreted as encompassing various types of projection system, including refractive, reflective, catadioptric, anamorphic, magnetic, electromagnetic and/or electrostatic optical systems, or any combination thereof, as appropriate for the exposure radiation being used, and/or for other factors such as the use of an immersion liquid or the use of a vacuum. Any use of the term "projection lens" herein may be considered as synonymous with the more general term "projection system" PS.

The lithographic apparatus LA may be of a type wherein at least a portion of the substrate may be covered by a liquid having a relatively high refractive index, e.g., water, so as to fill a space between the projection system PS and the substrate W - which is also referred to as immersion lithography. More information on immersion techniques is given in US6952253, which is incorporated herein by reference.

The lithographic apparatus LA may also be of a type having two or more substrate supports WT (also named "dual stage"). In such "multiple stage" machine, the substrate supports WT may be used in parallel, and/or steps in preparation of a subsequent exposure of the substrate W may be carried out on the substrate W located on one of the substrate support WT while another substrate W on the other substrate support WT is being used for exposing a pattern on the other substrate W.

In addition to the substrate support WT, the lithographic apparatus LA may comprise a measurement stage. The measurement stage is arranged to hold a sensor and/or a cleaning device. The sensor may be arranged to measure a property of the projection system PS or a property of the radiation beam B. The measurement stage may hold multiple sensors. The cleaning device may be arranged to clean part of the lithographic apparatus, for example a part of the projection system PS or a part of a system that provides the immersion liquid. The measurement stage may move beneath the projection system PS when the substrate support WT is away from the projection system PS.

In operation, the radiation beam B is incident on the patterning device, e.g. mask, MA which is held on the mask support MT, and is patterned by the pattern (design layout) present on patterning device MA. Having traversed the mask MA, the radiation beam B passes through the projection system PS, which focuses the beam onto a target portion C of the substrate W. With the aid of the second positioner PW and a position measurement system IF, the substrate support WT can be moved accurately, e.g., so as to position different target portions C in the path of the radiation beam B at a focused and aligned position. Similarly, the first positioner PM and possibly another position sensor (which is not explicitly depicted in Figure 1) may be used to accurately position the patterning device MA with respect to the path of the radiation beam B. Patterning device MA and substrate W may be aligned using mask alignment marks M1, M2 and substrate alignment marks PI, P2. Although the substrate alignment marks PI, P2 as illustrated occupy dedicated target portions, they may be located in spaces between target portions. Substrate alignment marks P1, P2 are known as scribe-lane alignment marks when these are located between the target portions C.

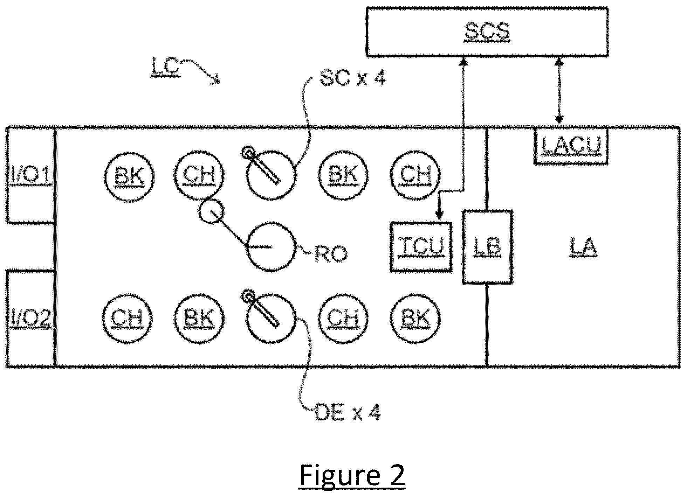

As shown in Figure 2 the lithographic apparatus LA may form part of a lithographic cell LC, also sometimes referred to as a lithocell or (litho)cluster, which often also includes apparatus to perform pre- and post-exposure processes on a substrate W. Conventionally these include spin coaters SC to deposit resist layers, developers DE to develop exposed resist, chill plates CH and bake plates BK, e.g. for conditioning the temperature of substrates W e.g. for conditioning solvents in the resist layers. A substrate handler, or robot, RO picks up substrates W from input/output ports I/O1, I/O2, moves them between the different process apparatus and delivers the substrates W to the loading bay LB of the lithographic apparatus LA. The devices in the lithocell, which are often also collectively referred to as the track, are typically under the control of a track control unit TCU that in itself may be controlled by a supervisory control system SCS, which may also control the lithographic apparatus LA, e.g. via lithography control unit LACU.

In order for the substrates W exposed by the lithographic apparatus LA to be exposed correctly and consistently, it is desirable to inspect substrates to measure properties of patterned structures, such as overlay errors between subsequent layers, line thicknesses, critical dimensions (CD), etc. For this purpose, inspection tools (not shown) may be included in the lithocell LC. If errors are detected, adjustments, for example, may be made to exposures of subsequent substrates or to other processing steps that are to be performed on the substrates W, especially if the inspection is done before other substrates W of the same batch or lot are still to be exposed or processed.

An inspection apparatus (otherwise referred to herein as a measurement machine), which may also be referred to as a metrology apparatus, is used to determine properties of the substrates W, and in particular, how properties of different substrates W vary or how properties associated with different layers of the same substrate W vary from layer to layer. The inspection apparatus may alternatively be constructed to identify defects on the substrate W and may, for example, be part of the lithocell LC, or may be integrated into the lithographic apparatus LA, or may even be a stand-alone device. The inspection apparatus may measure the properties on a latent image (image in a resist layer after the exposure), or on a semi-latent image (image in a resist layer after a post-exposure bake step PEB), or on a developed resist image (in which the exposed or unexposed parts of the resist have been removed), or even on an etched image (after a pattern transfer step such as etching).

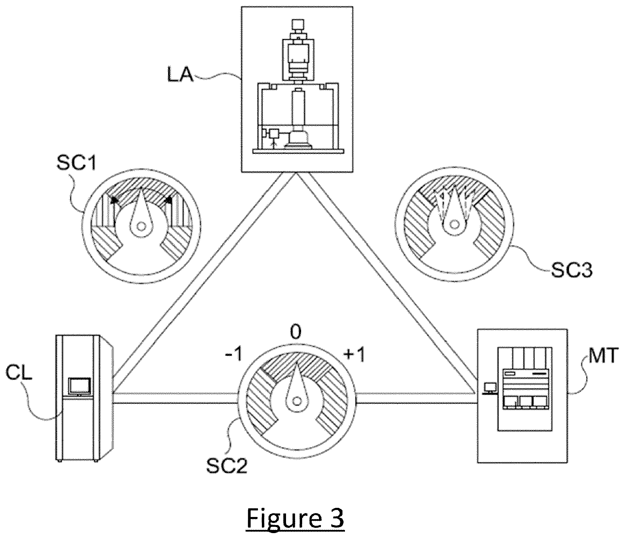

Typically the patterning process in a lithographic apparatus LA is one of the most critical steps in the processing which requires high accuracy of dimensioning and placement of structures on the substrate W. To ensure this high accuracy, three systems may be combined in a so called "holistic" control environment as schematically depicted in Fig. 3. One of these systems is the lithographic apparatus LA which is (virtually) connected to a metrology tool MT (a second system) and to a computer system CL (a third system). The key of such "holistic" environment is to optimize the cooperation between these three systems to enhance the overall process window and provide tight control loops to ensure that the patterning performed by the lithographic apparatus LA stays within a process window. The process window defines a range of process parameters (e.g. dose, focus, overlay) within which a specific manufacturing process yields a defined result (e.g. a functional semiconductor device) - typically within which the process parameters in the lithographic process or patterning process are allowed to vary.

The computer system CL may use (part of) the design layout to be patterned to predict which resolution enhancement techniques to use and to perform computational lithography simulations and calculations to determine which mask layout and lithographic apparatus settings achieve the largest overall process window of the patterning process (depicted in Fig. 3 by the double arrow in the first scale SC1). Typically, the resolution enhancement techniques are arranged to match the patterning possibilities of the lithographic apparatus LA. The computer system CL may also be used to detect where within the process window the lithographic apparatus LA is currently operating (e.g. using input from the metrology tool MT) to predict whether defects may be present due to e.g. sub-optimal processing (depicted in Fig. 3 by the arrow pointing "0" in the second scale SC2).

The metrology tool MT may provide input to the computer system CL to enable accurate simulations and predictions, and may provide feedback to the lithographic apparatus LA to identify possible drifts, e.g. in a calibration status of the lithographic apparatus LA (depicted in Fig. 3 by the multiple arrows in the third scale SC3).

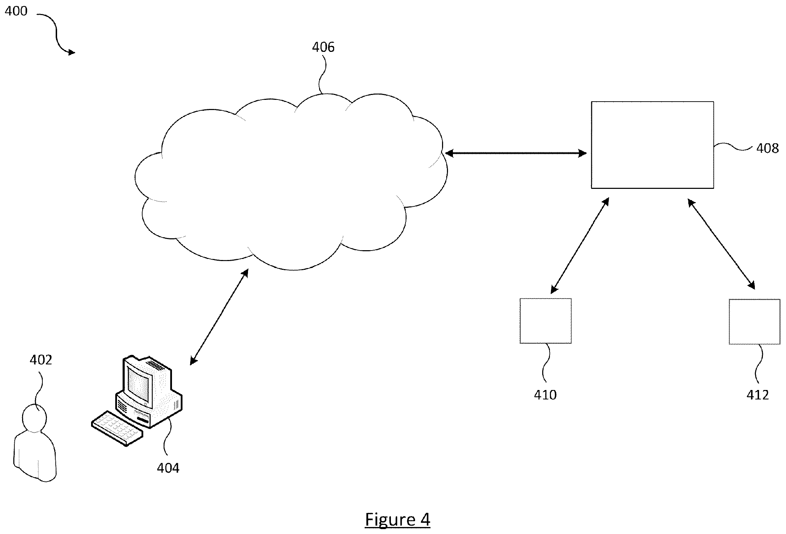

Figure 4 illustrates a system 400 according to one embodiment of the present invention in which a user 402 associated with a computing device 404 can submit a query requesting data stored in one or more data stores 410.

The data store(s) 410 may store data associated with a single machine (such as exposure data output by a lithographic apparatus LA or measurement data output by an inspection apparatus referred to above). Alternatively, the data store(s) 410 may store data associated with multiple machines (e.g. of a semiconductor fabrication plant), the multiple machines may comprise one or more lithographic apparatuses LA or one or more inspection apparatuses.

In the example shown in Figure 4, the user 402 inputs a query into computing device 404 which is then transmitted over a communication network 406 to a server 408 coupled to the communication network 406. The communication network 406 may be any suitable network which has the ability to provide a communication channel between the computing device 404 and the server 408. For example, the communication network 406 may be a packet-based network such as the Internet.

As shown in Figure 4, the server 408 is coupled to the data store(s) 410 and one or more metadata stores 412. The server 408 may comprise the data store(s) 410, alternatively the data store(s) 410 may be external to the server 408 but accessible by the server 408 by way of a wired or wireless interface. Similarly, the server 408 may comprise the metadata store(s) 412, alternatively the metadata store(s) 412 may be external to the server 408 but accessible by the server 408 by way of a wired or wireless interface.

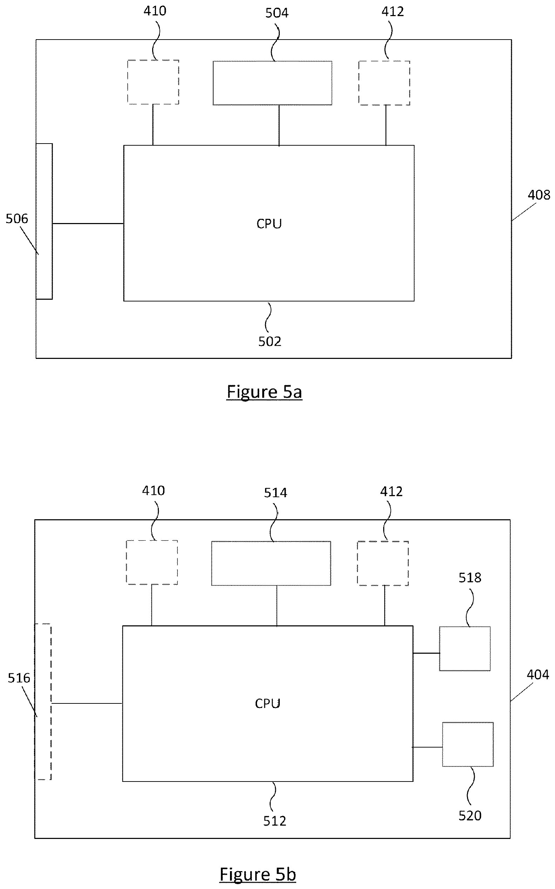

Figure 5a is a schematic block diagram of the server 408. As shown in Figure 5a, the server comprises a central processing unit ("CPU") 502, to which is connected a memory 504 and a communications interface 506.

The functionality of the CPU 502 described herein may be implemented in code (software) stored on a memory (e.g. memory 504) comprising one or more storage media, and arranged for execution on a processor comprising one or more processing units. The storage media may be integrated into and/or separate from the CPU 502. The code is configured so as when fetched from the memory and executed on the processor to perform operations in line with embodiments discussed herein. Alternatively, it is not excluded that some or all of the functionality of the CPU 502 is implemented in dedicated hardware circuitry (e.g. ASIC(s), simple circuits, gates, logic, and/or configurable hardware circuitry like an FPGA).

The communications interface 506 allows the server 408 to receive data from, and transmit data to, the computing device 404. In particular, communications interface 506 allows the server 408 to receive, via the communication network 406, a query transmitted by the computing device 404; and also transmit a response to the query to the computing device 404 via the communication network 406. The query is received by, and processed by, the CPU 502. Should the data store(s) 410 be remote from the server 408, the communications interface 506 allows the server 408 to receive data from, and transmit data to, the data store(s) 410. Similarly, should the metadata store(s) 412 be remote from the server 408, the communications interface 506 allows the server 408 to receive data from, and transmit data to, the metadata store(s) 412.

In other embodiments, the query is not transmitted over a communication network 406 to a server 408. Instead, the user 402 inputs a query into computing device 404 which handles responding to the query locally. Figure 5b is a schematic block diagram of computing device 404 configured to locally process a query.

As shown in Figure 5b, the server comprises a central processing unit ("CPU") 512, to which is connected a memory 514, an input device 518 (e.g. a keyboard, mouse, microphone and/or touchscreen), and an output device 520 (e.g. a display and/or a speaker). The query is received by, and processed by, the CPU 512.

The functionality of the CPU 512 described herein may be implemented in code (software) stored on a memory (e.g. memory 514) comprising one or more storage media, and arranged for execution on a processor comprising one or more processing units. The storage media may be integrated into and/or separate from the CPU 512. The code is configured so as when fetched from the memory and executed on the processor to perform operations in line with embodiments discussed herein. Alternatively, it is not excluded that some or all of the functionality of the CPU 512 is implemented in dedicated hardware circuitry (e.g. ASIC(s), simple circuits, gates, logic, and/or configurable hardware circuitry like an FPGA).

The computing device 404 may comprise the data store(s) 410, alternatively the data store(s) 410 may be external to the computing device 404 but accessible by the computing device 404 by way of a wired or wireless interface. Similarly, the computing device 404 may comprise the metadata store(s) 412, alternatively the metadata store(s) 412 may be external to the computing device 404 but accessible by the computing device 404 by way of a wired or wireless interface.

In implementations whereby the data store(s) 410 are external to the computing device 404, a communications interface 516 allows the computing device 404 to receive data from, and transmit data to, the data store(s) 410. In implementations whereby the metadata store(s) 412 are external to the computing device 404, the communications interface 516 allows the computing device 404 to receive data from, and transmit data to, the metadata store(s) 412.

Whilst embodiments have been described above with reference to a query being a "user query" in that a user has specified contents of the query, this is merely an example and the query may be generated and transmitted in an automated fashion without requiring involvement from a user. For example, the generation and transmittal of a query may be triggered by an event in a semiconductor fabrication plant.

Each of the data store(s) 410 stores one or more data sets where each data set is stored in the form of table. A table comprises KPI (performance indicator) and/or context data. In the context of a lithographic apparatus or inspection apparatus the KPI may include performance indicators relating to CD (critical dimension) control, overlay, alignment, focus, dose, etc. Context data may include timestamps of when then data was obtained, at least one identifier of one or more physical machines (e.g. a unique identifier of a particular lithographic apparatus or inspection apparatus), an identifier of a physical object (e.g. a unique identifier of a wafer being exposed/measured), a job identifier of a job which occurred, and a measurement location on a physical object. It is possible that a table may comprise only context data. For example a table L may store wafer layouts (which e.g. apply to many lots), and another table K may store related KPIs for each lot, whereby only key context columns are stored in table L. The combination (e.g. L JOIN K) of table L (storing only context data) and table K could provide the complete picture.

A dataset may be stored having a columnar data format, such columnar data can be a complex object. For example a KPI column can (recursively) contain calculations, which are function applications to other columns (which can again contain calculations).

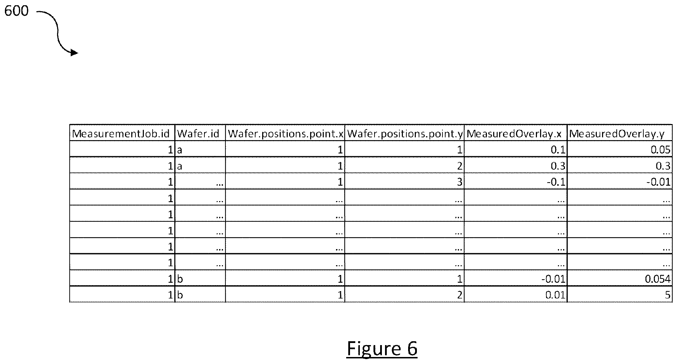

An example data set 600 is shown in Figure 6. As shown in Figure 6, the table 600 comprises four context columns and two KPI columns of the same type (referred to herein as "KpiType"). In particular, the table 600 includes a first context column "MeasurementJob.id"
which relates to a job identifier of a measurement job which occurred, as shown the table 600 includes data relating to a single measurement job (MeasurementJob.id = 1) but could include data relating to multiple measurement jobs. The table 600 includes a second context column "Wafer.id" which relates to an identifier of a physical object (a wafer in this example), as shown the table 600 includes data relating to two physical objects (Wafer.id = a, and Wafer.id =b) but could include data relating to any number of physical objects. The table 600 includes a third context column

"Wafer.positions.point.x" and fourth context column "Wafer.positions.point.y" which relates to measurement locations on the physical object. The table 600 includes a first KPI column "MeasuredOverlay.x" and "MeasuredOverlay.y" which are of the same type "MeasuredOverlay" and include overlay measurements at different measurement locations on the physical object.

All data-values stored in the data sets are described in terms of entities of a context model and/or a processing data model. The metadata store(s) 412 stores the context model and the processing data model.

The context model 700 models the business domain in which the query optimizer of the present invention operates. We refer to embodiments herein whereby the context model models the domain of semiconductor fabrication plant, however it could e.g. describe the domain of a utilities company, car-manufacturer, sales organization etc. Conceptually it is a Unified Modeling Language (UML) class-diagram comprising (sub-) classes with simple attributes (e.g. numbers, booleans, strings etc) and associations between classes. Associations are uni-/bi-directional and have cardinalities n:m (e.g. 1-to-many, many-to-one, etc). The context-model 700 adheres to a context-meta-model. That is, the context-model 700 contains classes modelled in terms of the context-meta-model. In UML terminology context-model 700 is an M1-model and the context-meta-model is an M2-model.

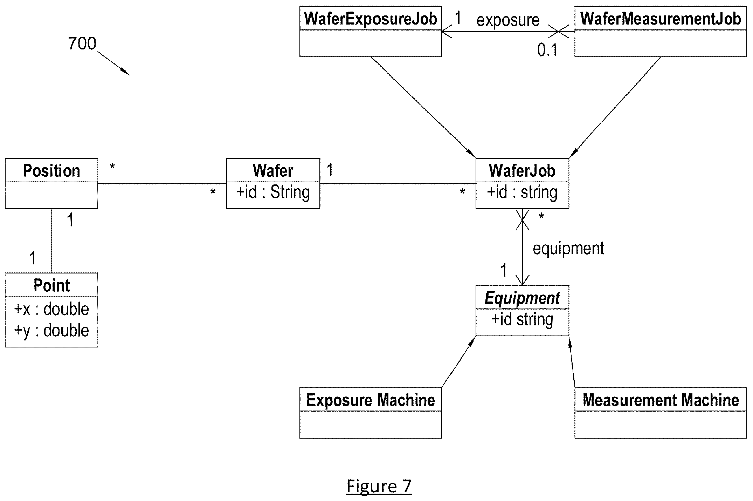

Figure 7 below provides a subset of the exposure and measurement jobs of wafers by an exposure machine and a measurement machine respectively in a semiconductor fabrication plant. The "exposure"-association associates the two jobs. A context-column's name in the data-store encodes a directed path in the context model 700 e.g. "WaferMeasurementJob.exposure.equipment.id" refers to "the id of the exposure machine which exposed the wafer measured by a measurement machine".

We refer below to examples of how the context model 700 is used to find candidate tables and columns when a query is received.

In a first example, the exposure machine has the following attributes (i) id (globally unique id), and (ii) customerName. The data store(s) 410 store a table T0 which comprises a context column "ExposureMachine.id", and a KPI column "kpi1", and a table T1 which comprises a context column "ExposureMachine.id" and a context column "ExposureMachine.customerName". If the CPU receives a query requesting (i) ExposureMachine.id (context), (ii) ExposureMachine.customerName (context), and (iii) kpi1, in accordance with embodiments of the present disclosure the CPU is able to discover that table T0 and table T1 must be JOIN-ed on ExposureMachine.id by inspecting the context-model which colocates id, customerName in one entity ExposureMachine, and by inspecting the context-meta-model which expresses that id is an identifying attribute.

In a second example, the data store(s) 410 store a table T0 which comprises a context column "WaferMeasurementJob.id", a context column "WaferMeasurmentJob.equipment.id", and a context column "WaferMeasurementJob.exposure.id". The data store(s) 410 also store a table T1 which comprises a context column "WaferExposureJob.id" and a context column "WaferExposureJob.equipment.id". The data store(s) 410 also store a table T2 which comprises a context column "Equipment.id" and a context column "Equipment.customerName".

In the second example if the CPU receives a query requesting "WaferMeasurementJob.id" (context) and "WaferMeasurementJob.exposure.equipment.customerName" context) in accordance with embodiments of the present disclosure the CPU is able to inspect the context model 700 to discover that: "WaferMeasurementJob.exposure" traverses a ?-1 association "exposure", i.e. the target entity WaferExposure is uniquely identified, and "WaferMeasurementJob.exposure.equipment" traverses a further ?-1 association "equipment", i.e. the target entity Equipment is uniquely identified.

Hence the CPU is able to discover that table T0 and table T1 must be JOIN-ed on WaferExposureJob.id into relation R0 since WaferExposureJob.id is marked as identifying attribute in the context-meta-model, and also discover that R0 must be JOIN-ed with table T2 on Equipment.id since an attribute of a class is marked as identifying attribute in the context-meta-model.

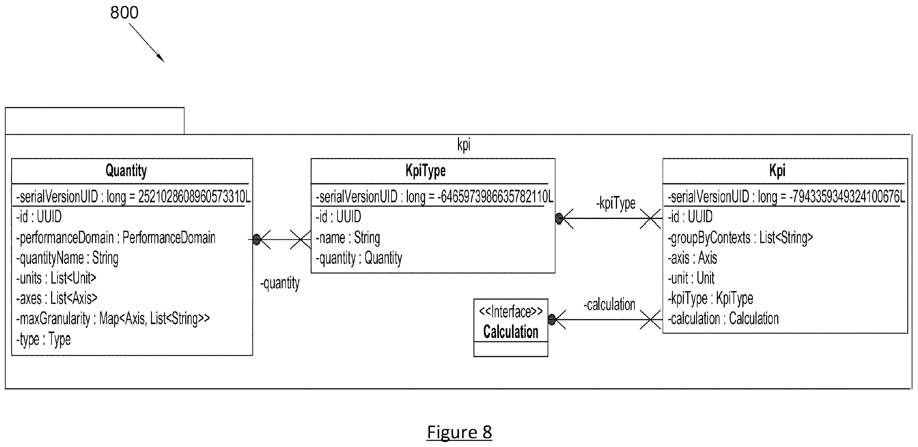

The processing data model 800 (fist view shown in Figure 8) of the functions required to derive variants of KPIs such as average, standard deviation etc. Function-applications can be nested, involving scalar and/or aggregation functions. This is required to describe KPI columns. Any KPI-value in a KpiColumn in a data store (typically a floating point number) belongs to a certain KPI e.g. "measured-overlay x at position (x, y) in nm". Overlay at a certain position on a wafer is called *point-level* overlay. The x/y coordinates defining the point to which the KPI-value applies are defined by the context model 700. By grouping the point-level values by wafer and applying the average-Calculation it is possible to obtain the "measured-overlay per wafer in nm" KPI. Since both share the same quantity and unit, these KPI share a common KpiType. Intuitively this is a family of KPIs at various aggregation levels, aggregated by some aggregation function (such as *average*).

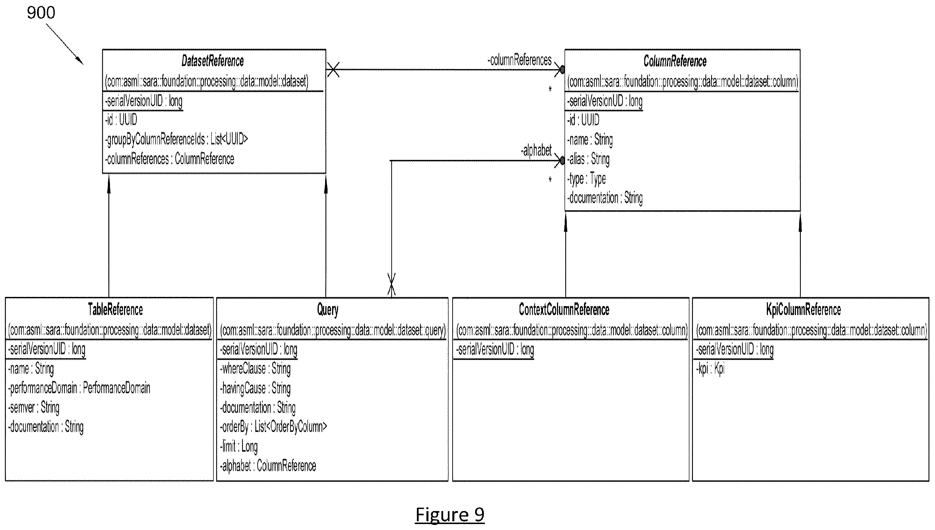

A second view of the processing data model 800 is shown in Figure 9 for tables 900 describing which context column(s) and/or KPI column(s) each table has, with context-columns linked to the context model 700. This is required to match requested context column(s) and/or KPI column(s) to stored context column(s) and/or KPI column(s). The semantics of a ContextColumnReference is encoded in its name e.g. "Wafer.position.point.x". The semantics of a KpiColumnReference are encoded in the kpi-attribute. The link from objects in the processing data model 800 to the context model 700 is weakly typed in ContextColumnReference.name (the ColumnReference.name property is inherited by ContextColumnReference). This is an implementation choice: the link can be otherwise modelled inside ContextColumnReference.

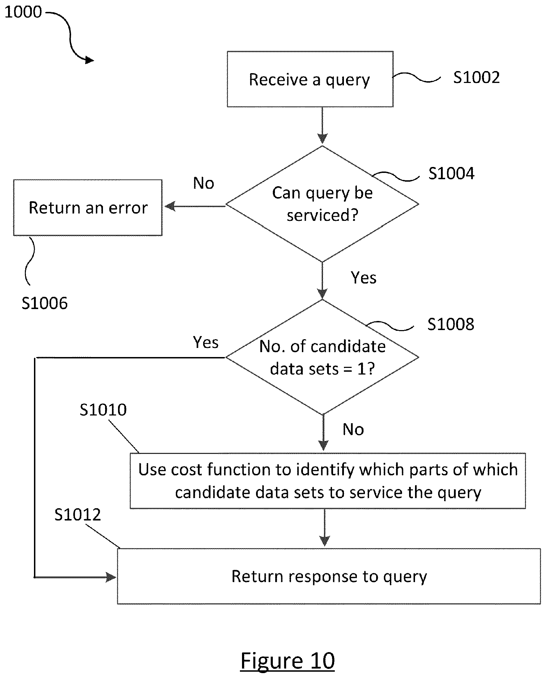

Reference is now made to Figure 10, which shows a flow chart of a method 1000 of retrieving data from the data store(s) 410. The method 1000 may be performed by the CPU 502 of the server 408, or the CPU 512 of the computing device 404.

At step S1002 the CPU receives a query. The query comprises semantic information and requests data associated with the semantic information from the data store(s) 410. The query is expressed in terms of the context model 700 and the processing data model 800.

The semantic information may comprise at least one type of KPI (performance indicator) for example the query may specify the "KpiType" as overlay. In embodiments whereby the semantic information comprise a type of KPI, the semantic information may additionally comprise a function e.g. an aggregation (such max, min, average, total) or a scalar function. For example, a query may request "average overlay" of overlay measurements stored in the tables in the data store(s) 410 (not limited to any particular machine, measurement job, wafer, or time period etc.

The query may comprise at least one piece of context information in addition to or in place of a type of KPI. The context information may comprises one or more of: a time window, at least one identifier of one or more physical machines, an identifier of a physical object, a job identifier of a job which occurred, and a measurement location on a physical object etc.

That is, a query may specify only context information, for example a query may request all data associated with a particular machine associated with a unique identifier, or may request all data associated with a timestamp falling within a specific time window (not limited to any particular machine).

Alternatively, a query may specify context information in addition to a type of KPI. For example, a query may request alignment data associated a particular machine associated with a unique identifier or overlay data associated with a particular wafer associated with a unique identifier. In these examples, the context information may comprise a granularity level of the requested type of KPI (e.g. per machine, per lot, per wafer etc.)

In one example, the semantic information may comprise a performance indicator column specification which comprises: (i) a type of KPI; (ii) a function; and (iii) and a granularity level. For example a query may request "average overlay per wafer" whereby "overlay" is the type of KPI, "average" is an aggregation function, and "per wafer" is the granularity level. Thus it can be seen that from one KPI type, many performance indicator column specifications can be constructed by using different functions (max, min, mean, ...) and/or granularity levels (machine, lot, wafer, chuck,...).

The query does not include any identifier of a table 600 stored in the data store(s) 410.

As an optional step (not shown in Figure 10), the CPU may determine if retrieving data associated with the semantic information from the data store(s) 410 will involve unnecessary computation, and if so, is configured to rewrite the user query before processing it further. For example, consider an example query that requests a KPI (i) at the most granular level defined for said KPI. e.g. "number of gearboxes produced per man/hour" or "point-level overlay"; and (ii) average (an aggregation) at the most granular level. In this example, the averaging is unnecessary if only one table contains all requested KPIs in one column.

At S1004, the CPU determines from the semantic information whether the query can be serviced using data selected from and/or derived from one or more candidate data set of the plurality of data sets. At S1004, the CPU uses the context model 700 and the processing data model 800 stored in the metadata store(s) 412. With reference to the example context model 700 and processing data model 800 shown in Figures 7-9, the metadata store(s) 412 contain a TableReference for each table stored in the data store(s) 410. TableReference contains ColumnReferences. A KpiColumnReference is a ColumnReference. Hence the CPU compares a KpiColumnReference specified in a query against KpiColumnReferences in TableReferences.

In some scenarios, one or more tables stored in the data store(s) 410 may comprise a column exactly matching the performance indicator column specification specified in the semantic information, in which case the CPU determines that the query can be serviced. In some scenarios, one or more tables stored in the data store(s) 410 may comprise a column from which a column corresponding to the performance indicator column specification specified in the semantic information can be derived, in which case the CPU determines that the query can be serviced.

In some implementations, an exact match in a Table T1 makes the table T1 a candidate if (i) the query's WHERE clause does not contain filter-attributes at lower granularity than the KPI's e.g. if the stored KPI is wafer-level but the query's WHERE-clause filters out certain wafer-positions, the KPI must not be used. The WHERE clause filters rows before aggregation (if any). If there's no aggregation it just filters rows; and (ii) the requested contexts are stored in table T1, or, can be obtained via JOINs with other tables.

A table storing a more granular version of the KPI, k', say, is a candidate if (i) applying the aggregation function to k' is mathematically sound. e.g. cascaded averaging is generally incorrect, whereas cascaded summation is generally correct; (ii) the requested contexts are stored in table T1, or, can be obtained via JOINs with other tables; and (iii) the contexts required to create aggregation groups of k' are either present in table T1, or, can be obtained via JOINs with other tables. In examples whereby the semantic information comprises a function (e.g. a scalar or aggregation function), at step S1004 the CPU is configured to determine what input data to the function is being specified by the semantic information; and determines that the query can be serviced based on identifying one or more tables in the data store(s) 410 which comprising a column associated with data output by the function when supplied with the input data. For example, if a query requested "average overlay error per wafer", the CPU can service the query if the data store(s) 410 comprise a table having a column directed to the requested data at the required granularity, if not the requested data must be derived by calculating it based on data of the finest level of granularity available in the data store(s) 410.

In some examples, the CPU may determine from the semantic information that the function comprises a further function as an input. The further function may be a scalar or aggregation function. In these examples, the CPU is configured to determine what input data to the further function is being specified by the semantic information; and determine that the query can be serviced based on identifying one or more tables in the data store(s) 410 comprising a column associated with data output by the further function when supplied with the input data.

If at step S1004 the CPU determines that the query cannot be serviced then the process 1000 proceeds to step S1006 where the CPU returns an error. In embodiments whereby the method 1000 is performed by the CPU 502 of the server 408, step S1006 comprises the CPU 502 transmitting an error message over the communication network 406 to the computing device 404.
In embodiments whereby the method 1000 is performed by the CPU 512 of the computing device 404, step S1006 comprises the CPU 512 outputting an error message via output device 520.

If at step S1004 the CPU determines that the query can serviced then the process 1000 proceeds to step S1008. At step S1008 the CPU determines if only a single table stored in the data store(s) 410 can service the query. If at step S1008 the CPU determines that only a single table stored in the data store(s) 410 can service the query, at step S1012 the CPU returns a response to the query. In this example, the response to the query may comprise the single table or a portion of the single table comprising the requested data.

If at step S1008 the CPU determines that multiple tables stored in the data store(s) 410 are candidates for servicing the query, the process 1000 proceeds to step S1010. At step S1010 the CPU uses a cost function to determine at least one table of the multiple candidate tables to service the query, and determines a portion (e.g. column and/or rows) of each of the determined tables to service the query. That is, the CPU uses the cost function to determine which parts of which tables (of the multiple candidate tables) to use to service the query.

The cost function may determine the at least one table from the multiple candidate tables to service the query based on assessing one or more attributes of each of the multiple candidate tables. The attributes may comprise a number of rows of the candidate table, and/or a number of columns of the candidate table. In embodiments whereby the semantic information comprises a KPI, the attributes may relate to whether the candidate table comprises a column associated with the performance indicator and no further column associated with a further performance indicator, or the candidate table comprises a column associated with the performance indicator and a further column associated with a further performance indicator.

At step S1010 the CPU may use a further cost function (e.g. a SQL engine) to determine how to combine the data contained in the determined at least one table of the multiple candidate tables in the most computationally efficient way.

At step S1012 the CPU returns a response to the query. The response comprises data obtained using the determined portions (e.g. column and/or rows) of each of the determined tables. The response may comprise the determined portions (e.g. column and/or rows) of each of the determined tables to service the query. Alternatively, the response may comprise the output of the further cost function which combines the data contained in the determined at least one table of the multiple candidate tables.

In embodiments whereby the method 1000 is performed by the CPU 502 of the server 408, step S1012 comprises the CPU 502 transmitting the response over the communication network 406 to the computing device 404. In embodiments whereby the method 1000 is performed by the CPU 512 of the computing device 404, step S1012 comprises the CPU 512 outputting the response via output device 520.

Although specific reference may be made in this text to the data store(s) 410 storing data relating to a lithographic apparatus used in the manufacture of ICs, it should be understood that the lithographic apparatus described herein may have other applications. Possible other applications include the manufacture of integrated optical systems, guidance and detection patterns for magnetic domain memories, flat-panel displays, liquid-crystal displays (LCDs), thin-film magnetic heads, etc.

Although specific reference may be made in this text to embodiments of the invention in the context of the data store(s) 410 storing data relating to a lithographic apparatus, embodiments of the invention may be used with data associated with other apparatuses. The data store(s) 410 may store data relating to a mask inspection apparatus, a metrology apparatus, or any apparatus that measures or processes an object such as a wafer (or other substrate) or mask (or other patterning device). These apparatus may be generally referred to as lithographic tools (and can be used in the context of optical lithography and imprint lithography). Such a lithographic tool may use vacuum conditions or ambient (non-vacuum) conditions.

Although specific reference may have been made above to the use of embodiments of the invention in the context of lithography, it will be appreciated that the invention, where the context allows, is not limited to lithography data and may be used in other applications, for example the data store(s) 410 may store data relating to a utilities company, car-manufacturer, sales organization etc.

Further embodiments of the invention are disclosed in the list of numbered clauses below:
1. A computer implemented method of retrieving data from at least one data store, the at least one data store storing a plurality of data sets each having a tabular data structure, the method comprising: receiving a query, wherein the query comprises semantic information and requests data associated with the semantic information from the at least one data store; determining from the semantic information whether the query can be serviced using data selected from and/or derived from one or more candidate data set of the plurality of data sets; if multiple candidate data sets of the plurality of data sets can service the query, using a cost function to determine at least one candidate data set of the multiple candidate data sets to service the query, and determine a portion of each of the at least one candidate data set to service the query; and returning a response to the query, the response comprising data obtained using the portion of each of the at least one candidate data set.
2. The computer implemented method of clause 1, wherein the semantic information comprises at least one performance indicator.
3. The computer implemented method of clause 2, wherein said determining comprises determining that the multiple candidate data sets each comprise a column corresponding to at least one of said at least one performance indicators.
4. The computer implemented method of clause 2 or 3, wherein the semantic information comprises a function.
5. The computer implemented method of any preceding clause, wherein the semantic information comprises at least one piece of context information.
6. The computer implemented method of clause 5, wherein the semantic information comprises at least one performance indicator and the context information comprises a granularity level of the requested performance indicator, and said determining comprises determining that each of the multiple candidate data sets each comprise a column corresponding to said performance indicator at the granularity level or a column from which a column corresponding to said performance indicator at the granularity level can be derived.
7. The computer implemented method of clause 5 or 6, wherein the context information comprises one or more of: a time window, at least one identifier of one or more physical machines, an identifier of a physical object, a job identifier of a job which occurred, and a measurement location on a physical object.
8. The computer implemented method of any preceding clause, wherein the semantic information comprises a performance indicator column specification, said specification comprising: (i) a performance indicator type; (ii) a function; and (iii) and a granularity level, and said determining comprises: determining that each of the multiple candidate data sets each comprise: a column corresponding to said specification; or a column from which a column corresponding to said specification can be derived.
9. The computer implemented method of any preceding clause, wherein said determining from the semantic information that the query can be serviced using data selected from multiple candidate data sets of the plurality of data sets comprises: determining that the semantic information comprises a function; determining what input data to the function is being specified by the semantic information; and determining that the query can be serviced based on identifying a candidate data set comprising a column associated with data output by the function when supplied with the input data.
10. The computer implemented method of any preceding clause, wherein said determining from the semantic information that the query can be serviced using data derived from multiple candidate data sets of the plurality of data sets comprises: determining that the semantic information comprises an function; determining from the semantic information that the function comprises a further function as an input; determining what input data to the further function is being specified by the semantic information; and determining that the query can be serviced based on identifying a candidate data set comprising a column associated with data output by the further function when supplied with the input data.
11. The computer implemented method of any preceding clause, wherein the cost function determines at least one candidate data set of the multiple candidate data sets to service the query based on assessing one or more attributes of each of the multiple candidate data sets.
12. The computer implemented method of clause 8, wherein the attributes comprise one or any combination of: a number of rows of the candidate data set; a number of columns of the candidate data set; and wherein the semantic information comprises a performance indicator, whether the candidate data set comprises a column associated with the performance indicator and no further column associated with a further key performance indicator, or the candidate data set comprises a column associated with the performance indicator and a further column associated with a further performance indicator.
13. The computer implemented method of any preceding clause, the method further comprising determining if retrieving data associated with the semantic information from the at least one data store will involve unnecessary computation, and if so, rewriting the user query.
14. The computer implemented method of any preceding clause, further comprising combining the portion of each of the at least one candidate data set to generate said data.
15. The computer implemented method of any preceding clause, wherein said determining from the semantic information that the user query can be serviced using data selected from and/or derived from multiple candidate data sets of the plurality of data sets is performed without the user query comprising an identifier of the multiple candidate data sets.
16. The computer implemented method of any preceding clause, wherein in response to determining that only a single candidate data set of the plurality of data sets can service the query, the method comprising returning a response to the query, the response comprising data obtained using the single candidate data set.
17. The computer implemented method of any preceding clause, wherein said query is a user query.
18. The computer implemented method of any preceding clause, wherein the method comprises: receiving said query from a user computing device via a computer network; and returning a response to the query comprises transmitting the response to the user computing device via the computer network.
19. At least one non-transitory computer-readable storage medium comprising instructions which, when executed by a processor of a computing device cause the processor to perform the method of any preceding clause.
20. A computing device for retrieving data from at least one data store accessible to the computing device, the at least one data store storing a plurality of data sets each having a tabular data structure, the computing device comprising: a processor, wherein the processor is configured to: receive a query, wherein the query comprises semantic information and requests data associated with the semantic information from the at least one data store; determine from the semantic information whether the query can be serviced using data selected from and/or derived from one or more candidate data set of the plurality of data sets; if multiple candidate data sets of the plurality of data sets can service the query, use a cost function to determine at least one candidate data set of the multiple candidate data sets to service the query, and determine a portion of each of the at least one candidate data set to service the query; and return a response to the query, the response comprising data obtained using the portion of each of the at least one candidate data set.

Although specific reference may be made in this text to specific programming languages (such as SQL) and to specific modelling languages (such as UML), embodiments of the present invention are not limited to any specific programming language or modelling language.

While specific embodiments of the invention have been described above, it will be appreciated that the invention may be practiced otherwise than as described. The descriptions above are intended to be illustrative, not limiting. Thus it will be apparent to one skilled in the art that modifications may be made to the invention as described without departing from the scope of the claims set out below.

## Claims

1. A computer implemented method of retrieving data from at least one data store, the at least one data store storing a plurality of data sets each having a tabular data structure, the method comprising:
receiving a query, wherein the query comprises semantic information and requests data associated with the semantic information from the at least one data store;
determining from the semantic information whether the query can be serviced using data selected from and/or derived from one or more candidate data set of the plurality of data sets;
if multiple candidate data sets of the plurality of data sets can service the query, using a cost function to determine at least one candidate data set of the multiple candidate data sets to service the query, and determine a portion of each of the at least one candidate data set to service the query; and
returning a response to the query, the response comprising data obtained using the portion of each of the at least one candidate data set.

2. The computer implemented method of claim 1, wherein the semantic information comprises at least one performance indicator.

3. The computer implemented method of claim 2, wherein said determining comprises determining that the multiple candidate data sets each comprise a column corresponding to at least one of said at least one performance indicators.

4. The computer implemented method of claim 2 or 3, wherein the semantic information comprises a function.

5. The computer implemented method of any preceding claim, wherein the semantic information comprises at least one piece of context information.

6. The computer implemented method of claim 5, wherein the semantic information comprises at least one performance indicator and the context information comprises a granularity level of the requested performance indicator, and said determining comprises determining that each of the multiple candidate data sets each comprise a column corresponding to said performance indicator at the granularity level or a column from which a column corresponding to said performance indicator at the granularity level can be derived.

7. The computer implemented method of claim 5 or 6, wherein the context information comprises one or more of: a time window, at least one identifier of one or more physical machines, an identifier of a physical object, a job identifier of a job which occurred, and a measurement location on a physical object.

8. The computer implemented method of any preceding claim, wherein the semantic information comprises a performance indicator column specification, said specification comprising: (i) a performance indicator type; (ii) a function; and (iii) and a granularity level, and said determining comprises:
determining that each of the multiple candidate data sets each comprise:
a column corresponding to said specification; or
a column from which a column corresponding to said specification can be derived.

9. The computer implemented method of any preceding claim, wherein said determining from the semantic information that the query can be serviced using data selected from multiple candidate data sets of the plurality of data sets comprises:
determining that the semantic information comprises a function;
determining what input data to the function is being specified by the semantic information; and
determining that the query can be serviced based on identifying a candidate data set comprising a column associated with data output by the function when supplied with the input data.

10. The computer implemented method of any preceding claim, wherein said determining from the semantic information that the query can be serviced using data derived from multiple candidate data sets of the plurality of data sets comprises:
determining that the semantic information comprises an function;
determining from the semantic information that the function comprises a further function as an input;
determining what input data to the further function is being specified by the semantic information; and
determining that the query can be serviced based on identifying a candidate data set comprising a column associated with data output by the further function when supplied with the input data.

11. The computer implemented method of any preceding claim, wherein the cost function determines at least one candidate data set of the multiple candidate data sets to service the query based on assessing one or more attributes of each of the multiple candidate data sets.

12. The computer implemented method of any preceding claim, the method further comprising determining if retrieving data associated with the semantic information from the at least one data store will involve unnecessary computation, and if so, rewriting the user query.

13. The computer implemented method of any preceding claim, further comprising combining the portion of each of the at least one candidate data set to generate said data.

14. The computer implemented method of any preceding claim, wherein said determining from the semantic information that the user query can be serviced using data selected from and/or derived from multiple candidate data sets of the plurality of data sets is performed without the user query comprising an identifier of the multiple candidate data sets.

15. At least one non-transitory computer-readable storage medium comprising instructions which, when executed by a processor of a computing device cause the processor to perform the method of any preceding claim.
